# EUROPEAN PATENT APPLICATION

(11) **EP 4 717 795 A1**
(43) Date of publication of application: **01.04.2026**
(21) Application number: 24203697.8
(22) Date of filing: 30.09.2024
(51) Int. Cl.: C25B 1/04, C25B 13/08

(54) **MICROFLUIDIC THIN FILM ELECTROLYSER**

(71) Applicant: Nederlandse Organisatie voor toegepast- natuurwetenschappelijk onderzoek TNO, 2595 DA 's-Gravenhage (NL)
(72) Inventor: BENS, Frennie Wilhelmus Bernardus, 2595 DA 's-Gravenhage (NL); DIAZ MORALES, Oscar Alfonso, 2595 DA 's-Gravenhage (NL); VERBEEK, Roy Gerardus Franciscus Antonius, 2595 DA 's-Gravenhage (NL)
(74) Representative: V.O.

(57) **Abstract**

The present invention relates to an electrolyser architecture and a method for performing electrolysis. The electrolyser comprises a proton exchange membrane (PEM) and a plurality of electrodes arranged on a surface of the PEM. A microfluidic fluid channel structure is aligned with the electrodes, forming multiple channels parallel to the surface of the PEM. These channels are designed to feed water to the electrodes and are configured to collect gases produced during electrolysis above the electrodes.

## Description

### FIELD OF THE INVENTION

The invention relates to a proton exchange membrane electrolyser and a method of performing electrolysis using an electrolyser with a proton exchange membrane. The invention also relates to systems or devices including such electrolyser. Also, the invention relates to the use of the electrolyser for performing electrolysis.

### BACKGROUND TO THE INVENTION

Proton Exchange Membrane Water Electrolysis (PEMWE) has emerged as a highly efficient technology for producing high-purity hydrogen, especially when coupled with intermittent renewable energy sources. Despite its advantages, current implementations of PEMWE face significant challenges that hinder their broader adoption and effectiveness in various applications.

One of the primary constraints of conventional PEMWE systems is the size and cost associated with their components. For instance, a typical 1 MW PEMWE stack, which is necessary for substantial hydrogen output, occupies an approximate volume of 1.2 cubic meters. This substantial size and the expense linked to such systems pose significant barriers, particularly in decentralized or smaller-scale settings where space efficiency and cost-effectiveness are important.

Moreover, the operation of PEMWE stacks at high current densities, a requirement for efficient hydrogen production, often leads to accelerated irreversible degradation. One of the degradation processes of PEMW is linked to thickening of the oxide layer within the PEM electrodes, adversely affecting the performance and durability of the system. This issue may be accompanied with the expensive nature of the important components such as bipolar plates and porous transport layers (PTL), which are integral to the stack's operation but remain cost-intensive and challenging to optimize.

The manufacturing scalability of PEMWE systems is another important challenge. The production processes for these systems should scale up efficiently to meet the growing demand for hydrogen fuel without a corresponding increase in production costs or compromises in quality.

The surface optimization of PEMWE components for enhanced electrocatalytic activity also presents a significant technical hurdle. Current systems often exhibit suboptimal surfaces that do not maximize the activity of catalysts, leading to underutilized and inefficient hydrogen production. This is worsened by the poor utilization of the scarce catalyst materials, which are often applied in greater quantities than necessary due to inefficient system designs.

Lastly, the materials used in PEM membranes are often not optimized for performance and durability, contributing further to the degradation issues and inefficiencies within the system.

These challenges underscore an important need for innovations in PEMWE technology that address the issues of size, cost, degradation resistance, scalability, and material optimization to make hydrogen production by means of electrolysis a viable and sustainable solution across various industries.

### SUMMARY OF THE INVENTION

It is an object of the invention to provide for a method and a system addressing at least one of the above mentioned drawbacks.

Additionally or alternatively, it is an object of the invention to provide for an improved design of a proton exchange membrane electrolyser.

Additionally or alternatively, it is an object of the invention to provide for a way to enhance an electrolysis process.

Additionally or alternatively, it is an object of the invention to provide for an electrolyser design that allows for compact and scalable configurations.

Additionally or alternatively, it is an object of the invention to provide for a system that improves the microfluidic management of reactants and products in electrolysis processes.

Thereto, the invention provides for an electrolyser, comprising: a proton exchange membrane, PEM; a plurality of electrodes arranged on a surface of the proton exchange membrane, a microfluidic fluid channel structure aligned with the electrodes, forming a plurality of channels parallel to the surface of the PEM, the channels being arranged to feed water to the plurality of electrodes, and wherein the channels are configured to collect gases produced during electrolysis above the plurality of electrodes.

The structure of the microfluidic channels, aligned and parallel to the PEM surface, is configured to efficiently transport water to the electrochemical interface (interface between electrodes and proton exchange membrane) as well as to collect gases produced during electrolysis directly above the electrodes. The enhanced water and gases management prevents mass transport bottlenecks and prevents gases to stick onto the electrode surface, keeping them electrochemically active. This design not only enhances the operational efficiency of the electrolyser but also minimizes the physical space needed by it, thus contributing to the compactness of the device.

A highly efficient and streamlined design is obtained, leveraging the placement of its components to maximize functionality and performance. The proton exchange membrane (PEM) is manufactured with an arrangement of anodes (for oxygen generation) and cathodes (for hydrogen generation) placed next to each other so to minimize ohmic losses and thus enhance PEMWE performance. The arrangement of electrodes allows to distribute the current along multiple electrodes. This reduces the current each electrode handles, minimize degradation without compromising device performance.

The electrodes and the microfluidic channels can be configured in a planar alignment, such that an in-plane transport mechanism for ions and gases is obtained.

The planar arrangement of electrodes reduces the distance travelled by the ions (i.e. protons) between anodes and cathodes, minimizing ohmic losses. Furthermore, the arrangement of microfluidic channels facilitates the transport of water and gases in and out the electrochemical interface. In overall, the planar design of electrodes and microfluidic channels reduce energy losses and facilitate the liquid and gas management which improves the overall energy efficiency of the electrolyser.

In some examples, the electrodes may be aligned in parallel, staggered, or interdigitated patterns that are specifically engineered to create lateral paths for ion movement. These paths facilitate the direct and efficient transfer of ions across the PEM from one electrode to another.

Optionally, the electrodes and the PEM have an in-plane configuration such that a shortest path for ion transfer is along the PEM from one electrode to another adjacent electrode.

The in-plane configuration of electrodes and the proton exchange membrane (PEM) in the electrolyser, is an important aspect that significantly enhances the operational efficiency and durability of the device. In conventional electrolysers, anode and cathodes are arranged facing each other with the polymer electrolyte membrane in between. In this configuration, ions must travel through the PEM and ohmic resistance is proportional to the thickness of the membrane. Thinner membranes reduces the ohmic energy losses, at the cost of enhancing gas crossover which reduces electrolyser efficiency and poses risks because hydrogen-oxygen mixtures are explosive. In the claimed in-plane configuration, the electrodes are arranged on the same plane as the PEM, placing them next to each other. This means ions travel laterally across the PEM surface from one electrode to another, rather than moving through the thickness of the membrane. This lateral movement across the plane of the PEM offers the shortest possible path between electrodes and thus minimize the ohmic losses.

The reduction in ion travel distance and resistance directly impacts the overall energy efficiency of the electrolyser. With lower energy input requirements for the same output of gas generation, the electrolyser becomes more cost-effective and energy-efficient. For example, long ion travel distances and high resistance can also lead to increased heat generation and stress on the PEM and electrodes. Over time, this can cause faster degradation of these materials, affecting the performance and lifespan of the electrolyser. The in-plane configuration mitigates this issue by ensuring that ions have a shorter, less resistive path, which minimizes the heat generated during operation. Consequently, this leads to reduced thermal and mechanical stress on the PEM and electrodes, which helps to prolong their functional life. By reducing the degradation rates of the PEM and electrodes through a more efficient ion transfer mechanism, the operational lifespan of the electrolyser can be significantly extended.

Optionally, the plurality of electrodes are configured in an interdigitated pattern.

The interdigitated design facilitates closer proximity and more effective interaction between anodes and cathodes, leading to increased electrolysis efficiency and a more compact device design. The interdigitated pattern refers to a configuration where the electrodes are laid out in a way that they interlock in a finger-like arrangement, with anodes and cathodes alternately positioned in close proximity.

By arranging the electrodes in an interdigitated pattern, the effective surface area available for electrochemical reactions is increased within the confines of the device's footprint. Such an interlocking pattern ensures that every anode is closely flanked by cathodes, and vice versa. The increased surface area allows more reactions to occur simultaneously, which can be important for enhancing the overall throughput of the electrolyser. The close arrangement of anodes and cathodes in the interdigitated design drastically reduces the distance ions need to travel during the electrolysis process. Shorter ion travel distances reduce ohmic energy losses of the electrolyser.

Optionally, the electrodes are comprised of a mesh structure.

The electrodes comprised of a mesh structure enhance the contact area between the electrodes and the reactants. The mesh design not only improves the efficiency of electrolytic reactions by increasing the three-phase boundary exposure but also supports better gas permeability and fluid distribution across the electrode surface. It allows for protons to enter the PEM membrane. This structural approach addresses the limitations of solid electrodes by reducing the potential for reactant blockage and improving the overall reaction rates.

Electrolysis in proton exchange membrane (PEM) systems often depends significantly on the efficiency of the three-phase boundary, where the gas, liquid, and solid phases meet. This boundary can be important because it is the actual site of the electrochemical reactions. The mesh structure of the electrodes optimizes the exposure of this three-phase boundary by providing a permeable framework that ensures continuous and effective contact between the electrode surfaces and the reactants (water and gases).

Gas bubbles formed during the electrolysis process can easily escape through the mesh, preventing any blockage that may otherwise occur in a system utilizing solid electrodes. This helps in maintaining a clear pathway for the movement of reactants and products. Patterned thin films allow for precise control over the electrode structure and surface area. Unlike a fiber mesh, which can provide random pathways that may not optimize ion transfer and gas escape, the patterned thin films create structured, predictable channels that can facilitate better gas release and efficient ion movement.

Additionally, the mesh allows for a more uniform distribution of the reactant fluid across the entire electrode surface. This uniformity ensures that all active sites on the electrode are effectively utilized, avoiding the inefficiencies that occur when parts of the electrode surface are underutilized due to poor fluid distribution.

Solid electrodes often suffer from issues such as reactant blockage, where gas bubbles or uneven reactant flow prevent effective contact across the electrode surface. This blockage can lead to decreased reaction rates and increased energy consumption due to the need for higher potentials to drive the electrolysis reaction. The mesh design significantly mitigates these issues by allowing gases to escape and fluids to permeate more freely, thus maintaining an open and active surface for reaction.

Optionally, the plurality of electrodes are arranged on the surface of the PEM with an alternating anode and cathode configuration.

By arranging the electrodes in an alternating anode and cathode configuration on the surface of the PEM, the travel distance for ions between electrodes is reduced, which in turn reduces energy losses and enhances the electrical efficiency of the electrolyser. This configuration also simplifies the internal structure of the device, reducing manufacturing complexity and cost.

Placing anodes and cathodes in alternating positions on the PEM ensures that each anode is closely flanked by cathodes and vice versa. This close proximity means that protons generated at the anode during electrolysis do not have to travel far to reach the nearest cathode, where they are reduced to form hydrogen gas. This setup ensures a rapid and efficient transfer of ions across the PEM, enhancing the rate of reaction and thus the overall output of the device.

The alternating configuration reduces the distance that protons, must traverse between the anode and cathode. In traditional designs where electrodes are not alternated, protons may need to travel longer distances within the electrolyte or across the PEM, which can increase resistance and energy losses due to the proton transport. By reducing these distances, the alternating configuration decreases the resistive losses and enhances the overall energy efficiency of the electrolyser.

An alternating arrangement of anodes and cathodes simplifies the internal wiring and connectivity required within the electrolyser. In systems with separate stacks for anodes and cathodes, complex arrangements may be necessary to ensure effective ion transport and electrical connectivity. The alternating pattern allows for improved electrical connections, thereby reducing the complexity of the device architecture. This simplicity not only makes the device easier and less costly to manufacture but also reduces the potential for mechanical failures and maintenance issues.

The microfluidic channel structure can be overlaid directly above the electrodes.

Overlaying the microfluidic channel structure directly above the electrodes makes easy the transport of water and produced gases in and out the electrochemical interface, where oxygen and hydrogen gasses are produced. The effective removal of gasses prevents inactivation of the electrodes by attachment of gas bubbles and thus enhances operational efficiency.

The direct overlay of the microfluidic channels over the electrodes means that each gas is confined to its generation site and guided directly into its respective channel. A structured and predictable path for gas flow is created by the overlay design, simplifying the complexity of the gas collection system. Traditional systems often require additional components or complex geometries to ensure effective gas separation and collection. In contrast, the design according to the disclosure integrates the collection pathway into the electrode structure itself, thereby reducing the need for supplementary separation mechanisms and streamlining the overall process. This integration not only saves space and materials but also enhances the operational efficiency by reducing the energy costs associated with gas handling and processing.

The anode can be configured for the generation of oxygen and the cathode for the generation of hydrogen, with protons being transported laterally across the PEM between the anodes and cathodes.

The lateral movement of protons across the PEM, from anode to cathode, reduces the resistance they encounter compared to movement in a vertical or more circuitous path. This lower resistance path ensures that less energy is consumed for the same amount of gas production, improving the energy efficiency of the electrolysis process.

The electrodes have catalyst materials to facilitate electrolytic reactions.

Catalysts are materials that facilitate the electrolysis process without being consumed by it. The use of catalysts increases the reaction rate and decreases the energy input required for electrolysis.

By incorporating catalyst materials onto the electrode surfaces, the rate of electrolytic reactions is significantly increased. Catalysts provide active sites that facilitate the adsorption and dissociation of water molecules, thereby accelerating the generation of hydrogen and oxygen gases. This increase in reaction rate means that less time is required to produce a given volume of gas, enhancing the throughput of the electrolyser. The presence of a catalyst reduces the overpotential required to drive the electrolytic reactions. Overpotential represents the extra voltage necessary over the theoretical voltage to drive the electrolysis at a practical rate. By lowering this overpotential, the overall energy input needed for the reactions is reduced, translating into lower electricity costs and improved energy efficiency of the electrolyser.

With catalyst-coated electrodes, the electrolyser can operate at lower voltages while maintaining or increasing gas output, which directly contributes to a higher overall system efficiency.

By configuring the electrodes specifically for their gas production role, catalysts can be tailored to the chemical needs of each reaction, e.g. platinum for hydrogen production at the cathode, and iridium or ruthenium for oxygen at the anode.

Optionally, the electrodes are selectively coated with a catalyst via a thin film deposition techniques.

The application of catalysts via deposition techniques (such as atomic layer deposition, sputtering, or electroplating) allows for precise control over the thickness and distribution of the catalyst on the electrodes. This precise control ensures that the catalytic surfaces are optimally utilized, avoiding areas with excessive or insufficient catalyst that can lead to inefficiencies. It will be appreciated that various other thin film deposition techniques may be used. Optimally coated electrodes ensure uniform reaction across the entire surface, preventing local hotspots or inactive zones that can diminish the overall performance.

This approach involves the precise application of catalyst materials directly onto the electrode surfaces, a process that can be finely controlled to achieve optimal thickness and uniformity. Thin film deposition techniques such as sputtering, atomic layer deposition (ALD), or electroplating are employed to apply a thin, continuous layer of catalyst material. This method ensures that the catalyst is placed only where it is needed, thereby maximizing its activity and utility during electrolysis.

An advantage of this selective coating is the enhancement of the electrocatalytic process's efficiency. By applying the catalyst directly to the electrode surface using precision techniques such as sputtering, atomic layer deposition (ALD), or electroplating, the catalysts can more effectively participate in the electrochemical reactions.

Moreover, this precision in catalyst application directly addresses the issue of poor utilization of scarce and expensive catalyst materials, such as platinum or iridium. Traditionally, these materials may be spread across the electrode surface in excess or unevenly, leading to wasteful and suboptimal catalytic reactions. With thin film deposition, the catalyst material can be used sparingly and still achieve high performance. This reduces the amount of catalyst required, leading to significant cost savings.

The uniform and controlled deposition of the catalyst ensures that the electrochemical activity is optimized across the entire surface of the electrode. This uniformity can be important for maintaining consistent performance across the electrolyser and for ensuring that each part of the electrode contributes equally to the electrolysis process. It eliminates hotspots of activity or areas of under-utilization, which can degrade the overall efficiency and/or lifespan of the electrolyser.

Known solutions may be based on relatively coarse materials, compared to thin film products. With currently used coarse materials, an in-plane design is not beneficial for the efficiency of the electrolyser.

The microfluidic fluid channel structure can be configured with channels extending parallel to and adjacent to a plane along which the PEM is arranged.

Coarse materials combined with thin membranes can result in punctures of the PEM membrane, causing the electrolyser to lose its functonality or having its efficiency drastically reduced. Therefore the use of thin film/flat/solid electrodes can give the opportunity to use thinner membranes, resulting in a lower resistance and therefore a higher efficiency.

The configuration of microfluidic channels extending parallel and adjacent to the plane of the PEM simplifies the design and reduces the overall thickness of the electrolyser. This setup enhances the integration of the channels with the electrode structure, facilitating improved fluid dynamics and gas separation, which in turn increases the efficiency and compactness of the device.

The proximity allows for a more compact assembly compared to traditional designs where components may be layered or staggered. Additionally, by situating the microfluidic channels close to the PEM, the thickness of the entire assembly is significantly reduced. This is particularly advantageous in applications where a compact design is important.

The design allows for the gases to be channeled away from the reaction sites immediately after they are generated.

At least the microfluidic channels and electrodes can be integrated into a single layer structure.

In some examples, a monolithically integrated structure is employed. In some examples, a structure is used that is composed of multiple layers. The channels and electrodes may be configured or arranged in a same plane or in close relative proximity to each other.

Such integration promotes better alignment and interaction between the functional elements of the electrolyser, improving reliability and reducing potential failure points within the device.

Furthermore, the integration significantly simplifies assembly procedures, effectively reducing the overall number of separate components that can be individually manufactured and then assembled. This not only cuts down on the complexity of the production line but also decreases the labor and time required, leading to cost savings and enhanced scalability of manufacturing operations.

The advantage of a monolithic layer is the improved alignment and close interaction between the electrodes and microfluidic channels. In conventional designs, the electrodes and channels may be constructed and aligned in separate steps, which can introduce misalignments and inconsistencies in the proximity of these elements. Misalignments can severely impact the efficiency of ion transport and gas collection, key functions in the electrolysis process. However, when these components are part of the same layer, they are inherently aligned with precision. This precision ensures that the paths for ion transfer and gas travel are advantageously short and direct, which not only enhances the operational efficiency of the electrolyser but also increases the consistency and reliability of its performance.

Optionally, the electrolyser includes a flexible substrate attached to the PEM, the flexible substrate being configured to allow for rollable and/or foldable configurations of the electrolyser.

Including a flexible substrate attached to the PEM allows for versatile configurations of the electrolyser, such as rollable and foldable designs. This flexibility enhances the adaptability of the device to various operational contexts and supports advantageous applications, such as portable or space-saving electrolyser systems.

The use of a flexible substrate, such as thin, pliable materials capable of bending without breaking, allows the electrolyser to be configured in non-traditional shapes and formats. The ability to fold or roll the electrolyser means that it can be easily transported and stored in a compact form. This is particularly advantageous for applications requiring mobility, such as portable hydrogen generators or integration into mobile power systems for vehicles or remote operations. The reduction in size and weight due to the flexible design greatly enhances the practicality of deploying these systems in a variety of contexts. The flexible nature of the substrate allows the electrolyser to conform to surfaces where rigid, traditional designs cannot be used. For example, the electrolyser can be integrated into curved surfaces of infrastructure, vehicle, etc., maximizing space utilization and aligning with design constraints specific to different applications.

Optionally, the microfluidic channels have a cross-sectional shape selected from the group consisting of square, rectangular, round, and V-shaped. In some examples, the cross-sectional shape is chosen to obtain a laminar flow.

Optionally, the electrodes and the microfluidic channels are configured to enable stacking in a 3D array, providing scalability and flexibility in design.

Optionally, the microchannels may have a width within the micrometer range, specifically from 10 micrometers to 1000 micrometers, with a preferred range of 50 to 200 micrometers.

Optionally, the gap between the anode and cathode is below 100 micrometers. In some advantageous examples, the gap ranges from 5 to 50 microns. In some advantageous examples, the gap is reduced to approximately 5 microns.

The close proximity of the electrodes, achieved through precise microfabrication, ensures a shorter path for ion transfer, significantly enhancing the efficiency of the electrolysis process. This arrangement also contributes to a more compact and efficient gas collection system, as the gases produced during electrolysis are confined in narrower channels, facilitating faster and more effective separation.

According to an aspect, the invention provides for a method of performing electrolysis using an electrolyser, comprising: providing a proton exchange membrane (PEM); arranging a plurality of electrodes on a surface of the proton exchange membrane (PEM); aligning a microfluidic fluid channel structure with the plurality of electrodes, wherein the microfluidic fluid channel structure includes a plurality of channels parallel to the surface of the PEM; performing electrolysis using the plurality of electrodes to induce the generation of gases; and collecting and separating the gases produced during the electrolysis in the plurality of channels of the microfluidic fluid channel structure, the channels being arranged to feed water to the plurality of electrodes, and wherein the channels are arranged to collect the gases above the plurality of electrodes.

The use of expensive bipolar plates and/or sub-optimized Porous Transport Layers (PTL) can be avoided. Moreover, the manufacturing scalability of the electrolyser can be enhanced. Additionally, in some cases, poorly optimized surfaces for the electrocatalytic activity can be avoided.

The manufacturing complexity for an in-plane configuration is simpler compared to a parallel configuration for high resolution thin film process. The use of thin film processing for the manufacturing of electrolysers also gives the ability to optimize individual layers, the possibility to integrate sensors and potentially reduces the size of an electrolyser. The use of thin film deposited catalyst can reach similar performance to industrial standards with a much lower Ir loading, this concept is compatible with the design of the electrolyser according to the disclosure.

In addition, the choice of materials can be made to ensure the device's flexibility, thereby reducing the chances of defects and/or penetration in the PEM membrane.

According to an aspect, the invention provides for a monolithic electrolyser comprising: a single-layer structure integrating a proton exchange membrane (PEM), electrodes, and a microfluidic fluid channel structure; the electrodes and microfluidic channels are monolithically integrated within the same layer; wherein the microfluidic channels are configured to transport water and collect gases directly above the electrodes.

Optionally, the electrodes are arranged in an alternating anode and cathode configuration to facilitate lateral movement of ions across the PEM and improve the efficiency of electrolysis.

Optionally, the electrodes are comprised of a mesh structure. In this way, the surface area for ion exchange and gas generation may be enhanced.

It will be appreciated that any of the aspects, features and options described in view of the electrolyser apply equally to the method of performing electrolysis and the described devices and systems. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a schematic diagram of an embodiment of an electrolyser;
Fig. 2 shows a schematic diagram of an embodiment of an electrolyser;
Fig. 3 shows a schematic diagram of an embodiment of electrodes;
Fig. 4 shows a schematic diagram of an embodiment of electrodes; and
Fig. 5 shows a schematic diagram of a method of performing electrolysis using an electrolyser.

### DETAILED DESCRIPTION

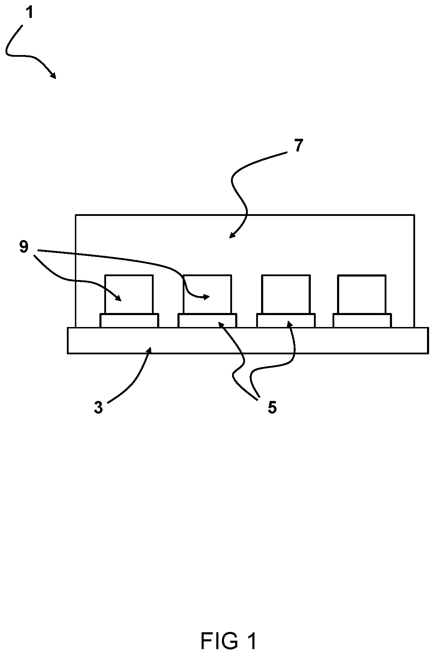

Fig. 1 shows a schematic diagram of a cross sectional view of an embodiment of an electrolyser 1. The electrolyser 1 comprises a proton exchange membrane 3 (PEM); a plurality of electrodes 5 arranged on a surface of the proton exchange membrane 3; and a microfluidic fluid channel structure 7 aligned with the electrodes 5, forming a plurality of channels 9 parallel to the surface of the PEM 3, the channels being arranged to feed water to the plurality of electrodes 5, and wherein the channels 9 are configured to collect gases produced during electrolysis above the plurality of electrodes 5.

An in-plane electrolyser design may be obtained using microfluidics 7 to separate the hydrogen and oxygen side. The thickness of the PEM membrane and therefore the travelling distance of proton ions may be significantly reduced. The need for expensive bipolar plates and porous transport layers may be effectively eliminated.

The design of electrolyser 1 results in more freedom for employing materials and coating methods. A monolithic processing and limited assembly steps may be employed advantageously. Furthermore, the electrolyser may provide for scale up opportunities and significant cost reduction.

A significant size reduction of the total stack may be obtained compared to known solutions. Furthermore, the need for certain expensive components can be eliminated, for example the PTL.

Additionally, three dimensional microfluidics can be used to recombine the flows from the separate channels, by introducing multiple microfluidic layers.

Furthermore, the (micro)channels 9 formed in the structure 7 may be configured to result in a laminar flow during operation. In this way, mixing can be circumvented if a wall between the anode and cathode is punctured or has an existing hole in it. With the help of microfluidics gas is transported physically by the water flow.

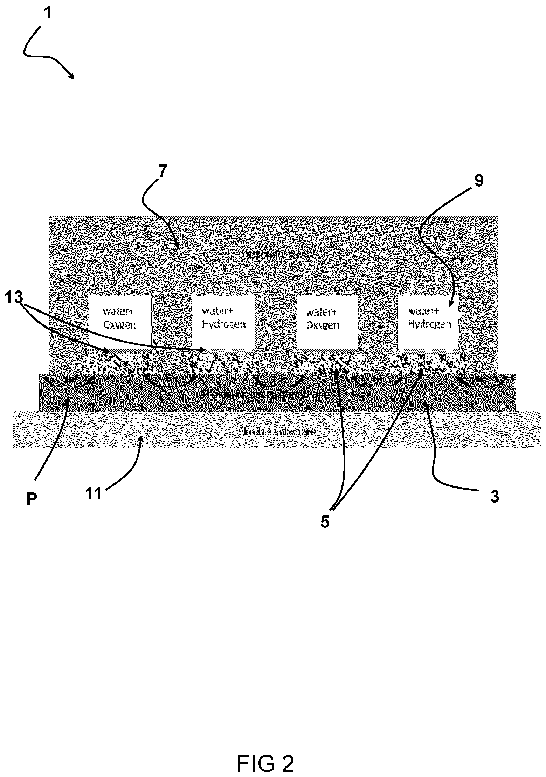

Fig. 2 shows a schematic diagram of a cross sectional view of an embodiment of an electrolyser 1. The electrolyser 1 includes a flexible substrate 11 attached to the PEM 3. In this example, the electrodes 5 and the microfluidic channels 9 formed by structure 7 are configured in a planar alignment, such that an in-plane transport mechanism for ions and gases is obtained. The traveling path P of the proton ions are illustrated.

Advantageously, the electrolyser can have an in-plane design, wherein components of the electrolyser, such as the electrodes, catalyst layers, and microfluidic channels, are arranged horizontally (or laterally) rather than vertically. This design fundamentally changes the direction and dynamics of proton ions flow within the PEM 3 and the overall device architecture.

At the base of this electrolyser 1 is the PEM 3, which in traditional designs is oriented such that protons travel perpendicularly through the membrane. In the in-plane design, the PEM 3 is laid out flat, and the proton flow is lateral, along the plane of the membrane, rather than across its thickness.

The electrodes 5 are positioned on the surface of the PEM 3. Unlike traditional setups where electrodes are stacked and separated significantly by the membrane's thickness, in this design, electrodes are placed side by side with relatively small separation. This results in a significant reduction in the travel distance for protons moving from the anode to the cathode, enhancing the ionic conductivity and efficiency.

In this example, the anode is configured for the generation of oxygen and the cathode for the generation of hydrogen, with protons being transported laterally across the PEM 3 between the anodes and cathodes.

The electrodes 5 are provided with a catalyst material 13 to facilitate electrolytic reactions. For example, the electrodes 5 may be selectively coated with a catalyst via a thin film deposition technique.

In some examples, in the in-plane configuration, catalysts 13 are deposited directly onto these electrodes 5 in a selective and optimized manner using thin film deposition techniques. This precise placement ensures that the catalysts are only where needed, reducing material usage and improving the reaction efficiency.

The microfluidic channels 9 can be integrated directly above the electrodes 5. These channels 9 can be important for efficiently directing the flow of gases produced at the electrodes 5. Their close proximity to the reaction sites minimizes the distance gases must travel to be collected, thus reducing mixing and potential gas crossover.

In some examples, the electrodes 5 are mesh-like configured to permit water and ion exchange.

In some examples, the electrodes 5 are designed in an interdigitated pattern, which increases the surface area available for reactions. This design can enhance the transport of protons.

In some examples, the PEM 3 has a thickness of less than 200 micrometers, preferably less than 100 micrometers.

In some examples, the microfluidic channels 9 are configured with a width ranging from 5 microns to 50 microns.

In some examples, the electrodes 5 are arranged in an interdigitated pattern with a gap of less than 200 micrometers, preferably less than 150 micrometers between adjacent electrodes. In this way, resistive losses may be reduced.

In some examples, microfluidic channel structure 7 includes a gastight, non-conductive material such as polymer or coated ceramics. For example, if the microfluidic channel structure is made with ceramics, it could be obtained by printing ceramics and/or using patterned glass.

In some examples, the catalyst layers 13 are selectively deposited on the electrodes using a thin film deposition process. For example, the electrodes may be coated with a catalyst via a thin film coating techniques, e.g. atomic layer deposition (ALD) to achieve a uniform and precisely controlled catalyst thickness.

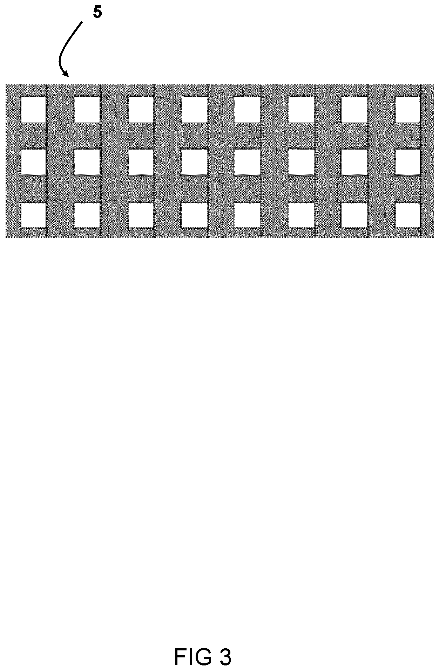

Fig. 3 shows a schematic diagram of a top view of an embodiment of electrodes 5. In this example, the electrodes 5 are comprised of a mesh structure. The size and shape of the pores in the electrode mesh may be optimized to balance the three-phase boundary of water, electricity, and the membrane, enhancing the reaction kinetics and overall efficiency.

The mesh electrodes may have an open, porous structure, which allows for direct and extensive contact between the water (electrolyte) and the proton exchange membrane. The mesh electrodes have a porosity ranging from 50% to 90%, striking a balance between mechanical integrity and maximal exposure of the reactive surfaces. This design ensures that there is sufficient space for gas escape and ion transport without compromising the structural stability of the electrodes.

The mesh electrodes may be directly arranged on the surface of the proton exchange membrane, allowing for minimal distance between the anode and cathode, which may be important for reducing the overall resistance of the electrolyser.

The surface of the mesh electrodes may be selectively coated with catalyst materials using a thin film deposition technique. This selective coating is applied only where needed to enhance the reaction rates without unnecessary use of expensive catalyst materials like platinum or iridium.

By facilitating better ion and gas transport, the mesh electrodes significantly reduce the energy required for electrolysis. The selective deposition of catalyst materials reduces the amount of expensive metals required.

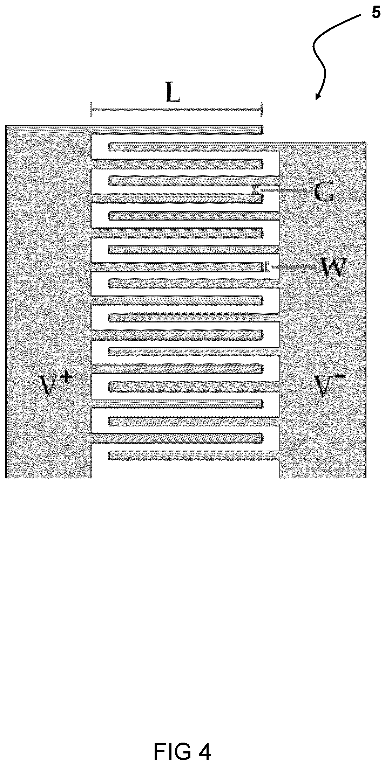

Fig. 4 shows a schematic diagram of an embodiment of electrodes 5. In this example, a set of interdigitated electrodes are arranged. The electrodes may be made of corrosion-resistant metals like titanium, tantalum, niobium, platinum, or gold, which may be deposited for example using sputter coating or electroplating. The electrodes may be patterned to facilitate electrolysis, optimizing the three-phase boundary where the electrodes, catalyst, and PEM interact. The width (W) of each electrode and the gap (G) between them may be minimized to reduce resistivity and improve efficiency.

Directly aligned with the electrodes 5, channels 9 may be arranged that are designed to carry water to the electrodes while collecting gases produced during electrolysis. The channels 9 are substantially parallel to the PEM surface. The length L (represents a length of the electrodes and the PEM along which the microfluidic channels and electrodes are aligned. A gap G is a dimension representing the distance between adjacent electrodes, which is important for minimizing resistive losses and maximizing efficiency. A width W measures the width of each electrode, influencing the surface area available for electrolysis and the efficiency of the gas collection. Symbols V+ and V- denote electrical connection for power supply, where V+ indicates the positive voltage applied to anodes and V-the negative voltage applied to cathodes.

The electrodes are selectively coated with catalyst. These may be deposited and patterned on top of a full area coated PEM 3, for example Nafion or Aquivion. Allowing for proton ions to travel in the in-plane direction of the PEM (instead of out of plane). The microfluidic channels may be aligned on top of the anodes and cathodes to ensure that there is no interference between the cathode and anode.

In some examples, a high-resolution technique like photolithography is used for such patterning. Said structure can be fabricated on a flexible substrate, enabling a free form product. A free form product can give advantages in domains like fuel cells, PV-Electrolyser combinations and others.

A low loading electrocatalyst layer may be provided (by using thin film deposition techniques like sputtering, ALD or electroplating).

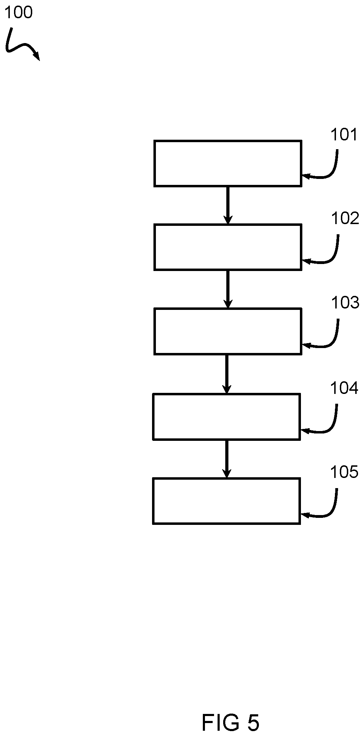

Fig. 5 shows a schematic diagram of a method 100 of performing electrolysis using an electrolyser. In a first step 101, a proton exchange membrane (PEM) is provided. In a second step 102, a plurality of electrodes are arranged on a surface of the PEM. In a third step 103, a microfluidic fluid channel structure is aligned with the plurality of electrodes, wherein the microfluidic fluid channel structure includes a plurality of channels parallel to the surface of the PEM. In a fourth step 104, electrolysis is performed using the plurality of electrodes to induce the generation of gases. In a fifth step 105, the gases produced during the electrolysis are collected and separated in the plurality of channels of the microfluidic fluid channel structure, the channels being arranged to feed water to the plurality of electrodes, and wherein the channels are arranged to collect the gases above the plurality of electrodes.

When water is introduced into the system, it is split at the anode into oxygen gas and positively charged protons (H+). Instead of moving vertically through a thick membrane, protons may travel laterally through the thinner layer of the PEM, directly from the anode side to the cathode side. At the cathode, these protons can combine with electrons (supplied through the external circuit) to form hydrogen gas. The microfluidic channels facilitate the immediate capture and separation of oxygen and hydrogen gases, directing them to their respective outlets.

The arrangement of the electrodes and microfluidic channels can facilitate a reduction in the effective distance for proton travel in an advantageous way. In some examples, the microfluidic structure may be fabricated using a nonporous, gas tight polymer material that is also electrically insulating.

Because the protons travel a shorter distance, the ionic resistance is drastically reduced, which can significantly increase the efficiency of the electrolysis process. The precision in catalyst and electrode placement can reduce the quantity of expensive materials required, such as platinum and iridium, lowering the overall cost. The in-plane approach allows the entire assembly to be more compact, making it suitable for a variety of applications, including portable and integrated systems.

In some examples, the proton exchange membrane is deposited using lamination, spin coating or slot die coating on flexible substrate. Electrode material such as titanium, tantalum, niobium, platinum, gold or any other for example corrosion-resistant metal may be deposited by sputter coating or electroplating. If needed these metals can be passivated by a coating.

Electrode material may be patterned using a photoresist mask and chemical etching (using e.g. photolithography techniques). By applying a mesh pattern in the electrode, the needed three-phase points are created. The three-phase point is where the liquid, electrode/catalyst and proton exchange membrane are present in close contact. The photoresist mask may be stripped/removed. A selective deposition of catalyst material may be carried out, for example by means of selective electroplating. Additionally or alternatively, deposition and patterning of catalyst materials may be done using lift off techniques or etching techniques with lithography. Other techniques may also be used.

Microfluidics may be fabricated by lamination of (dry-film) photoresists and patterning using lithography. Additionally or alternatively, separately produced microfluidics may be bonded, using for example three dimensional printing, imprinting, hot embossing, injection moulding and/or micromachining. The wide variety of possibilities can give flexibility in shape and material.

In some examples, the 3D microfluidics may be directly produced on top of the electrodes with catalysts using various possible additive manufacturing techniques. For instance, methods such as 3D printing and screen printing allow for precise layering and placement of materials. This may ensure that the microfluidic channels are well-aligned with the underlying electrode structures. Such direct production method can be particularly advantageous for applications requiring complex, multi-layered structures and precise control over material properties.

The channels may be closed/sealed to separate the channels, for example with a dry film photoresist by laminating over the channels. Additionally or alternatively, pre patterned closure layer may be used by for example 3D printing, imprinting, hot embossing, injection moulding or micromachining.

Optionally, additional microfluidic layers are added, for example creating a microfluidic redistribution layer.

The benefits of using large area photolithography processes within the process flow enables a free-form product. The resolution of these type of processing gives the ability to optimize the product on the scale of few micrometers. Therefore, the product can be optimized in a much higher detail in shape and dimension compared to standard used components.

Prior art designs use relatively coarse materials, compared to thin film products. With currently used coarse materials, an in-plane design is not beneficial for the efficiency of the electrolyser. The combination of high-resolution features and an in-plane design provides significant advantages.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean `at least one', and do not exclude a plurality. The term "and/or" includes any and all combinations of one or more of the associated listed items. The mere fact that certain measures are recited in mutually different claims does not indicate that a combination of these measures cannot be used to an advantage.

## Claims

1. An electrolyser, comprising:
a proton exchange membrane, PEM;
a plurality of electrodes arranged on the surface of the proton exchange membrane; and
a microfluidic fluid channel structure aligned with the electrodes, forming a plurality of channels parallel to the surface of the PEM, the channels being arranged to feed water to the plurality of electrodes, and wherein the channels are configured to collect gases produced during electrolysis above the plurality of electrodes, wherein the electrodes and the microfluidic channels are configured in a planar alignment, such that an in-plane transport mechanism for ions and gases is obtained.

2. The electrolyser of claim 1, wherein the electrodes are arranged on the PEM such that lateral movement of protons across the PEM is facilitated.

3. The electrolyser of any one of the preceding claims, wherein the electrodes and the PEM have an in-plane configuration such that a shortest path for ion transfer is parallel to the surface of the PEM from one electrode to another adjacent electrode.

4. The electrolyser of any one of the preceding claims, wherein the plurality of electrodes are configured in an interdigitated pattern.

5. The electrolyser of any one of the preceding claims, wherein the electrodes are comprised of a mesh structure.

6. The electrolyser of any one of the preceding claims, wherein the plurality of electrodes are arranged on the surface of the PEM with an alternating anode and cathode configuration.

7. The electrolyser of any one of the preceding claims, wherein the microfluidic channel structure is overlaid directly above the electrodes.

8. The electrolyser of any one of the preceding claims, wherein the anode is configured for the generation of oxygen gas and the cathode for the generation of hydrogen gas, with protons being transported lateral to the surface of the PEM between the anodes and cathodes.

9. The electrolyser of any one of the preceding claims, wherein the electrodes are provided with a catalyst material to facilitate electrolytic reactions.

10. The electrolyser of claim 9, wherein the electrodes are selectively coated with a catalyst via a thin film deposition technique.

11. The electrolyser of any one of the preceding claims, wherein the microfluidic fluid channel structure is configured with channels extending parallel to and adjacent to a plane along which the PEM is arranged.

12. The electrolyser of any one of the preceding claims, wherein at least the microfluidic channels and electrodes are integrated into a single layer structure.

13. The electrolyser of any one of the preceding claims, wherein the electrolyser includes a flexible substrate attached to the PEM, the flexible substrate being configured to allow for rollable and/or foldable configurations of the electrolyser.

14. A method of performing electrolysis using an electrolyser, comprising:
providing a proton exchange membrane, PEM;
arranging a plurality of electrodes on the surface of the PEM;
aligning a microfluidic fluid channel structure with the plurality of electrodes, wherein the microfluidic fluid channel structure includes a plurality of channels parallel to the surface of the PEM;
performing electrolysis using the plurality of electrodes to induce the generation of gases; and
collecting and separating the gases produced during the electrolysis in the plurality of channels of the microfluidic fluid channel structure, the channels being arranged to feed water to the plurality of electrodes, and wherein the channels are arranged to collect the gases above the plurality of electrodes; and
wherein the electrodes and the microfluidic channels are configured in a planar alignment, such that an in-plane transport mechanism for ions and gases is obtained.
